Europäisches Patentamt

European Patent Office

Office européen des brevets

(19)

(11) Numéro de publication : **0 434 515 A1**

(12) **DEMANDE DE BREVET EUROPEEN**

(21) Numéro de dépôt : **90403583.9**

(22) Date de dépôt : **13.12.90**

(51) Int. Cl.⁵ : **B64G 1/40**

(30) Priorité : 18.12.89 FR 8916708

(43) Date de publication de la demande :
26.06.91 Bulletin 91/26

(84) Etats contractants désignés :
**DE FR GB NL**

(71) Demandeur : **AEROSPATIALE Société
Nationale Industrielle
37, Boulevard de Montmorency
F-75781 Paris Cédex 16 (FR)**

(72) Inventeur : **Girard, Alain
Les Belles Terres, 28 Chemin de St-Laurent
F-06800 Cagnes Sur Mer (FR)**

(74) Mandataire : **Rinuy, Santarelli
14, avenue de la Grande Armée
F-75017 Paris (FR)**

(54) Système adaptable de stockage de liquide sous pression et application au stockage d'un ergol dans un véhicule spatial.

(57) Système de stockage de liquide sous pression, destiné à contenir sous une pression de pressurisation l'une quelconque de diverses quantités de liquide connues à l'avance avec approximativement le même taux de remplissage dans un environnement à température variable, comportant une capacité principale (5A, 5B) adaptée à contenir au moins la plus grande de ces quantités de liquide en laissant subsister un volume résiduel de gaz sous pression, caractérisé en ce qu'il comporte une capacité annexe de gaz (13A, 13B, 14A, 14B) en communication permanente avec le volume résiduel de gaz sous pression, mais mécaniquement indépendante de la capacité principale au travers d'un dispositif anti-retour de liquide (17A, 17B), le volume de cette capacité annexe étant choisi en sorte que la quantité de liquide effectivement introduite, ramenée à la somme des volumes de la capacité principale (5A, 5B) et de la capacité annexe (13A, 13B, 14A, 14B), soit au moins approximativement égal audit taux de remplissage.

EP 0 434 515 A1

# SYSTEME ADAPTABLE DE STOCKAGE DE LIQUIDE SOUS PRESSION ET APPLICATION AU STOCKAGE D'UN ERGOL DANS UN VEHICULE SPATIAL

L'invention concerne un système de stockage de liquide sous pression, comportant un réservoir pressurisé et son utilisation notamment à bord d'un vaisseau spatial, pour le stockage d'un ou plusieurs ergols liquides de propulsion.

On connaît de très nombreuses applications de réservoirs contenant des liquides sous une pression compatible avec leur utilisation ultérieure. Compte tenu des dégâts très graves qui peuvent être causés par une explosion de réservoir sous pression, on dimensionne ces récipients pour que ce risque soit très faible dans toutes les conditions d'utilisation prévues, et ce avec les marges imposées par les divers règlementations en vigueur.

Souvent le réservoir contenant le liquide est clos hermétiquement. Il enferme aussi en général un gaz de pressurisation. Le rapport entre le volume de liquide et le volume intérieur total du réservoir représente le taux de remplissage.

On ferme le récipient à une certaine pression à une certaine température, et avec un taux de remplissage donné.

Or après la fermeture, la température peut varier.

Lorsque la température augmente, la pression augmente. Le calcul de cette augmentation de pression est complexe, car non seulement la pression du gaz croît avec la température, mais le liquide se dilate, sa pression partielle de vapeur saturante dans le gaz de pressurisation augmente, et le récipient lui-même change de volume par élasticité.

Néanmoins, en général, la pression augmente avec la température, et ce d'autant plus vite que le réservoir est plus plein : un récipient donné rempli à moitié verra sa pression augmenter sensiblement comme le prévoit la loi des gaz parfaits, alors que ce même récipient totalement plein risque, pour une même augmentation de température, de se briser très rapidement, un peu à la manière d'une bouteille d'eau qui gèle, car l'élasticité de l'enveloppe n'est pas à même de supporter la dilatation d'un fluide incompressible.

La pression maximale dépend donc de la température et de la pression au moment de la fermeture du récipient, du taux de remplissage et de la température maximale à supporter. C'est cette pression maximale qui est l'un des paramètres principaux du dimensionnement de l'enveloppe. Plus cette pression est élevée, et plus le réservoir doit être épais, donc lourd.

Pour une quantité donnée de liquide, une pression d'origine et une gamme de température données, la masse du réservoir est minimale pour un certain taux de remplissage optimal. Avec un réservoir plus petit et donc un taux de remplissage plus élevé, le réservoir est plus lourd car son épaisseur doit être plus forte. Avec un réservoir plus grand, l'épaisseur de la paroi peut diminuer, mais la masse augmente néanmoins à cause de l'augmentation de surface de l'enveloppe.

Dans le domaine des vaisseaux spatiaux et des satellites, on utilise couramment des réservoirs sous pression pour transporter et utiliser des liquides, et principalement des ergols de propulsion pour la manoeuvre d'apogée et pour les corrections ultérieures. La masse étant un paramètre très critique dans les engins spatiaux (il peut falloir jusqu'à 100 tonnes de combustible au lancement par kilogramme mis en orbite, et la quantité d'ergols à embarquer pouvant dépasser la moitié de la masse totale d'un satellite géostationnaire par exemple, la masse des réservoirs est un élément important de la masse totale.

Par ailleurs, dans le cas des satellites géostationnaires, il faut tenir compte de ce que le lancement peut avoir lieu à partir de bases de lancement situées à des latitudes différentes. Par exemple, on peut lancer depuis Kourou en Guyane avec ARIANE, ou depuis le Centre Spatial Kennedy en Floride avec des lanceurs américains, ou encore de Xichang avec des lanceurs chinois. Les lois de la mécanique céleste font que, pour remplir la même mission avec la même durée de vie, l'on doit emmener des quantités d'ergols différentes pour les divers sites de lancement, les quantités d'ergols augmentent avec la latitude de lancement. Typiquement, le tir par ARIANE est optimal car l'inclinaison de l'orbite de transfert est faible (7 à 10°), alors qu'un tir depuis la Floride conduit à des inclinaisons de 27 à 28° pour l'orbite de transfert.

La quantité d'ergols à embarquer peut ainsi différer de 20% environ.

Il est courant de réaliser des satellites compatibles avec divers lanceurs, pour permettre aux propriétaires de ces satellites de mieux négocier le prix de lancement et de disposer d'un moyen de secours en cas de défaillance grave dans une famille de lanceurs.

Compte tenu de la complexité interne des réservoirs d'ergols de satellites (du fait de la faible gravité et des accélérations qui peuvent apparaître), qui incorporent en général des dispositifs de rétention capillaire assez délicats, de la position de ces réservoirs dans le satellite et de leur montage par soudure, et enfin de la date tardive à laquelle on peut être amené à changer de lanceur, il n'est pas question de modifier les réservoirs selon le lanceur. Les satellites ont donc des réservoirs d'ergols conçus et dimensionnés pour le lanceur le plus contraignant en quantités d'ergols.

L'objet de la présente invention est de permettre une optimisation de la masse du système de stockage d'ergols en fonction des diverses quantités d'ergols à embarquer, compte tenu du site de lancement par exemple, en autorisant une adaptation du volume utile du réservoir d'ergols tard dans la phase d'assemblage du satellite.

Plus généralement, l'invention a pour objet un système de stockage de liquide sous pression adapté à supporter des variations de température dans une plage connue et qui puisse être optimisé en masse, par des modifications mineures, en fonction de la quantité de liquide qui sera finalement introduite dans ce système.

L'invention propose à cet effet un système de stockage de liquide sous pression, destiné à contenir sous une pression de pressurisation l'une quelconque de diverses quantités de liquide connues à l'avance avec approximativement le même taux de remplissage dans un environnement à température variable, comportant une capacité principale adaptée à contenir au moins la plus grande de ces quantités de liquide en laissant subsister un volume résiduel de gaz sous pression, caractérisé en ce qu'il comporte une capacité annexe de gaz en communication permanente avec le volume résiduel de gaz sous pression, mais mécaniquement indépendante de la capacité principale au travers d'un dispositif anti-retour de liquide, le volume de cette capacité annexe étant choisi en sorte que la quantité de liquide effectivement introduite, ramenée à la somme des volumes de la capacité principale et de la capacité annexe, soit au moins approximativement égale audit taux de remplissage.

Selon des caractéristiques avantageuses de l'invention éventuellement combinées :

– la capacité annexe est raccordée à une conduite amont connectée à une embouchure amont de la capacité principale et à une vanne d'admission de gaz, normalement fermée en configuration de stockage,

– le dispositif anti-retour de liquide est situé à l'embouchure dans la capacité principale de la conduite par laquelle la capacité annexe est raccordée au volume résiduel de gaz,

– la capacité annexe a un volume qui représente au plus 15 % du volume de la capacité principale,

– la capacité annexe est formée d'un ou plusieurs réservoirs de volume individuel valant approximativement 5 % à 10 % du volume de la capacité principale,

– la capacité principale est un réservoir de forme généralement arrondie (sphérique, ellipsoïdale, en forme d'ovale de Cassini y compris d'éventuelles portées cylindriques), et son volume interne est tel que la plus grande desdites quantités de liquide le remplit de 95 à 99 %.

L'invention propose également un véhicule spatial utilisant au moins un ergol liquide de propulsion comportant, pour le stockage de celui-ci, un système de stockage de liquide sous pression.

Selon d'autres caractéristiques de l'invention :

– la capacité principale comporte un dispositif de rétention capillaire auprès de son embouchure aval de sortie de liquide,

– la capacité annexe comporte au moins un réservoir dont l'enveloppe est par exemple à base de titane, aluminium, acier inox ou tout matériau compatible avec les conditions mécaniques et chimiques locales (contraintes, corrosion...),

– il comporte un deuxième ergol liquide stocké dans un second système de stockage de liquide sous pression de même structure que le système contenant le premier ergol, ces deux systèmes étant connectés à une même source de gaz de pressurisation.

De manière préférée, la capacité annexe est démontable.

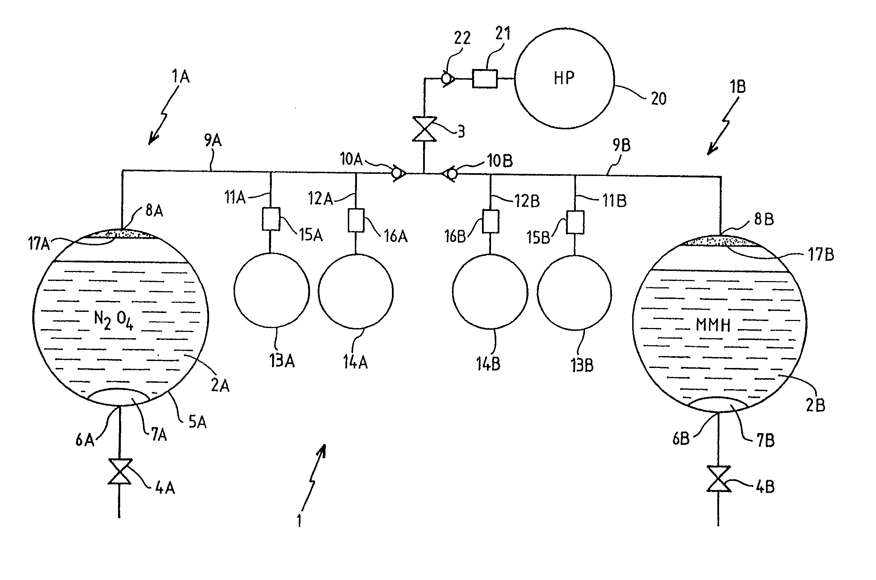

Des objets, caractéristiques et avantages de l'invention ressortent de la description qui suit, donnée à titre d'exemple non limitatif, en regard du dessin annexé sur lesquel la figure unique notée 1 est un schéma de principe d'un système de stockage de liquide sous pression conforme à l'invention dans le cas du stockage d'ergol de propulsion d'un véhicule spatial ou satellite.

Ce système de stockage de liquide sous pression, noté 1 dans son ensemble est en fait double en ce sens qu'il est adapté au stockage de deux ergols différents 2A et 2B ; il s'agit en pratique, de manière connue, du $N_2O_4$ et du MMH (monométhylhydrazine).

On notera 1A et 1B les deux branches de ce système qui sont spécifiques de chacun de ces deux ergols. En fait, dans la suite, l'indice A correspondra à tout ce qui est spécifique du premier ergol (le $N_2O_4$ dans l'exemple considéré) tandis que l'indice B correspondra à l'autre ergol.

La branche 1A s'étend depuis une vanne amont 3, commune aux deux branches et une vanne aval 4A. Elle comprend principalement un réservoir de liquide 5A, ici de forme sphérique, qui contient la totalité de l'ergol 2A. En variante non représentée, peu fréquente, la capacité principale que constitue ce réservoir 5A peut être fractionnée en plusieurs réservoirs de liquide montés en parallèle.

De façon classique, ce réservoir comporte, à l'entrée de son orifice aval 6A, un dispositif de rétention capillaire schématiquement représenté en 7A, de tout type connu approprié. En pratique, ce dispositif 7A est plus volumineux et complexe que cela est représenté mais ne faisant pas en soi partie de l'invention il ne sera pas décrit ici plus avant.

En son orifice amont 8A, le réservoir 5A est relié à une conduite amont 9A munie, à sa séparation d'avec la conduite amont 9B de l'autre branche, d'un clapet antirefoulement 10A.

Selon l'invention, sur cette conduite amont est raccordée au moins une conduite de dérivation connectée à une capacité : dans l'exemple représenté, il y a deux conduites de dérivation 11A et 12A connectées à deux petits réservoirs 13A et 14A. Sur ces conduites 11A et 12A apparaissent des raccords 15A et 16A, qui sont obturés jusqu'au moment de l'assemblage de ces petits réservoirs et pendant leur stockage préalable. Ces petits réservoirs 13A et 14A définissent conjointement une capacité annexe pour le réservoir principal 5A, avec lequel ils sont en communication permanente.

Un dispositif anti-retour de liquide 17A est prévu entre l'intérieur du réservoir principal 5A et la capacité annexe 13A/14A, de manière à empêcher tout écoulement de liquide vers la capacité annexe dans laquelle le liquide deviendrait irrécupérable.

Ce dispositif 17A, de tout type connu en soi, est ici disposé auprès de l'orifice amont 8A du réservoir.

On appréciera que les réservoirs 13A et 14A constitutifs de la capacité annexe sont d'une structure bien plus simple que le réservoir principal 5A puisqu'ils ne sont destinés à recevoir que du gaz. D'autre part, ils sont petits, donc légers et faciles à loger dans le satellite dans lequel subsiste toujours des emplacements vides (en fait on peut choisir, en fonction des emplacements disponibles, le nombre de petits réservoirs entre lesquels distribuer le volume de la capacité annexe). En outre, étant petits et légers, ces réservoirs sont faciles à monter et leur montage peut se faire bien plus tard dans le processus d'assemblage du satellite que le montage du réservoir principal.

La description qui vient d'être faite de la branche 1A s'applique, au changement d'indice près (de A en B), à la branche 1B.

Pendant toute la phase de lancement, les vannes 4A, AB et 3 sont fermées. Avant la première utilisation d'ergol (en pratique la manoeuvre d'apogée) on ouvre la vanne amont 3 qui met les diverses branches 1A et 1B en communication avec une source de haute pression 20 qui applique, au travers d'un régulateur de pression 21 et d'un clapet anti-retour 22, la pression de refoulement qui agira pour l'alimentation en ergols des tuyères (non représentées).

Le calcul de l'ensemble du système de stockage 1, pour tirer parti de l'invention, se conduit comme suit.

La capacité principale (le réservoir 5A ou 5B) associé à chaque ergol est dimensionnée en volume pour la quantité maximale $Q_{max}$ de l'ergol considéré qui est nécessaire pour le site de lancement envisagé le plus contraignant, avec un taux de remplissage $Tx_{max}$ proche (mais inférieur) de l'unité.

L'homme de métier sait déterminer la quantité d'ergol $Q_{opt}$ et le taux de remplissage $Tx_{opt}$ qui correspondent sensiblement au remplissage optimal de cette capacité principale prise isolément, pour la gamme de température prévue et la pression d'origine choisie, c'est-à-dire le remplissage qui conduit à une masse minimale de cette capacité principale.

Lorsqu'on dépasse ce remplissage optimal, la capacité principale n'est plus à même de supporter à elle seule la pression maximale prévisible en cas d'élévation de température.

Pour utiliser cette capacité principale avec un taux de remplissage supérieur à $Tx_{opt}$, on adjoint selon l'invention un ou plusieurs petits réservoirs extérieurs supplémentaires 13A, 14A, connectés au réservoir principal par une ou plusieurs canalisations (ici unique, 9A) débouchant dans la capacité principale à un endroit où il ne peut jamais se trouver de liquide, mais seulement du gaz de pressurisation. Ce, ou ces, réservoir(s) annexe(s) est(sont) rempli(s) de gaz de pressurisation seulement, et se trouve(nt) à la même pression que la (ou les) capacité(s) principale(s).

La présence de cette capacité annexe diminue le taux de remplissage effectif du volume global et autorise la dilatation du liquide qui peut chasser le gaz de pressurisation vers ces capacités. Il faut néanmoins s'assurer que le liquide ne puisse pas, par dilatation, dépasser le volume des capacités principales qui lui est dévolu. Cette dernière condition définira le taux de remplissage maximal $Tx_{max}$ (en pratique entre 97 et 99 % environ selon les ergols).

Le volume minimum de cette capacité annexe découlera du choix a priori du taux de remplissage effectif ou global (en pratique, aux environs de 85-90 %, voire 95 %) et de la quantité d'ergol qui sera effectivement à emporter.

On peut ainsi, grâce à la présente invention, utiliser un réservoir principal donné pour emporter de façon optimale plusieurs quantités de liquide (correspondant aux divers sites de lancement envisagés) selon que l'on lui adjoint aucun, un ou plusieurs réservoirs annexes 13A, 14A montés à l'approche du lancement. Pour un réservoir de satellite avec dispositif de rétention capillaire, comme on l'a vu, cela est d'autant plus avantageux que seule la (ou les) cavité(s) principale(s) contenant le liquide doit(doivent) comporter un dispositif de rétention capillaire, et non les réservoirs annexes qui ne contiennent que du gaz.

Ainsi l'invention permet bien de tenir compte de ce que les besoins en ergols diffèrent selon le site de lancement pour un satellite géostationnaire (à cause de l'inclinaison de l'orbite de transfert qui dépend de la latitude géographique du pas de tir) et de satisfaire les clients de satellite qui demandent une compatibilité avec deux systèmes de lancement pour pallier la déficience éventuelle d'un système de lancement, et pour mieux pouvoir négocier les tarifs de lancement.

En variante, on peut dimensionner le système de réservoirs pour avoir la capacité nécessaire au site de lancement le plus pénalisant avec une (ou plusieurs) capacité(s) annexe(s) installée(s), et enlever ensuite tout ou partie de ces capacités annexes (en obturant les raccords 15A ou 16A, ou 15B ou 16B) si le site de lancement effectif demande moins de chargement en ergol.

L'invention permet de gagner jusqu'à 10 % en masse totale de réservoir.

A titre d'exemple, les réservoirs principaux font 1000 litres, et les réservoirs annexes font 50 litres. Ces derniers ont une enveloppe en titane de 0,5 mm d'épaisseur, ce qui leur permet de résister à une pression de pressurisation typiquement de l'ordre de 17 bars (avec d'éventuelles pointes temporaires à 25 bars, voire plus), le tout pour un poids individuel de 2 kg environ. La pression de refoulement en service est sensiblement égale à la pression de remplissage.

En pratique, ces réservoirs annexes sont métalliques ou en une matière plastique résistant à la corrosion par l'ergol considéré. Ces réservoirs peuvent être souples mais il est toutefois préféré qu'ils soient suffisamment rigides pour garder des formes et des volumes sensiblement constants.

L'invention trouve principalement son intérêt dans le domaine spatial mais peut, éventuellement, être appliquée dans des secteurs où on cherche à minimiser l'encombrement ou le poids du système de stockage d'un liquide (chimie...)

Il va de soi que la descripion qui précède n'a été proposée qu'à titre d'exemple non limitatif et que de nombreuses variantes peuvent être proposées par l'homme de l'art sans sortir du cadre de l'invention.

## Revendications

1. Système de stockage de liquide sous pression, destiné à contenir sous une pression de pressurisation l'une quelconque de diverses quantités de liquide connues à l'avance avec approximativement le même taux de remplissage dans un environnement à température variable, comportant une capacité principale (5A, 5B) adaptée à contenir au moins la plus grande de ces quantités de liquide en laissant subsister un volume résiduel de gaz sous pression, caractérisé en ce qu'il comporte une capacité annexe de gaz (13A, 13B, 14A, 14B) en communication permanente avec le volume résiduel de gaz sous pression, mais mécaniquement indépendante de la capacité principale au travers d'un dispositif anti-retour de liquide (17A, 17B), le volume de cette capacité annexe étant choisi en sorte que la quantité de liquide effectivement introduite, ramenée à la somme des volumes de la capacité principale (5A, 5B) et de la capacité annexe (13A, 13B, 14A, 14B), soit au moins approximativement égal audit taux de remplissage.

2. Système selon la revendication 1, caractérisé en ce que la capacité annexe est raccordée à une conduite amont (9A, 9B) connectée à une embouchure amont de la capacité principale et à une vanne d'admission de gaz (3), normalement fermée en configuration de stockage.

3. Système selon la revendication 1 ou la revendication 2, caractérisé en ce que le dispositif anti-retour de liquide (17A, 17B) est situé à l'embouchure (8A) dans la capacité principale de la conduite (9A) par laquelle la capacité annexe est raccordée au volume résiduel de gaz.

4. Système selon l'une quelconque des revendications 1 à 3, caractérisé en ce que la capacité annexe a un volume qui représente au plus 15 % du volume de la capacité principale.

5. Système selon l'une quelconque des revendications 1 à 4, caractérisé en ce que la capacité annexe est formée d'un ou plusieurs réservoirs (13A, 13B, 14A, 14B) de volume individuel valant approximativement 5 % à 10 % du volume de la capacité principale.

6. Système selon l'une quelconque des revendications 1 à 5, caractérisé en ce que la capacité principale est un réservoir dont le volume interne est tel que la plus grande desdites quantités de liquide le remplit de 95 à 99 %.

7. Véhicule spatial utilisant au moins un ergol liquide de propulsion comportant, pour le stockage de celui-ci, un système de stockage de liquide sous pression selon l'une quelconque des revendications 1 à 6.

8. Véhicule spatial selon la revendication 7, caractérisé en ce que la capacité principale comporte un dispositif de rétention capillaire (7A, 7B) auprès de son embouchure aval (6A, 6B) de sortie de liquide.

9. Véhicule spatial selon la revendication 7 ou la revendication 8, caractérisé en ce que la capacité annexe comporte au moins un réservoir (13A, 13B, 14A, 14B).

10. Véhicule spatial selon l'une quelconque des revendications 7 à 9, caractérisé en ce qu'il comporte un deuxième ergol liquide stocké dans un second système de stockage de liquide sous pression de même structure que le système contenant le premier ergol, ces deux systèmes (1A, 1B) étant connectés à une même source de gaz de pressurisation.

11. Véhicule spatial selon l'une quelconque des revendications 7 à 10, caractérisé en ce que la capacité annexe est démontable.

**Office européen des brevets**

# RAPPORT DE RECHERCHE EUROPEENNE

Numero de la demande

EP 90 40 3583

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2063672 (SOCIETE EUROPEENNE DE PROPULSION) <br> * page 1, ligne 38 - page 2, ligne 8 * <br> * page 2, lignes 22 - 40 * <br> * page 3, lignes 28 - 32 * <br> * revendication 1; figures * | 1-3, 7, 9-11 | B64G1/40 |
| Y | | 8 | |
| A | | 4-6 | |
| | --- | | |
| Y | EP-A-132175 (MATRA) <br> * abrégé; revendication 1 * <br> * page 1, lignes 1 - 18 * | 8 | |
| | --- | | |
| A | JOURNAL OF SPACECRAFT AND ROCKETS. <br> vol. 18, no. 6, décembre 1981, NEW YORK US <br> pages 499 - 505; H.Macklis et al: <br> "Selection of an Optimized Integrated Propulsion System" <br> * le document en entier * | 1, 7 | |
| | ----- | | |

**DOMAINES TECHNIQUES RECHERCHES (Int. Cl.5 )**

B64G

Le présent rapport a été établi pour toutes les revendications

| Lieu de la recherche | Date d'achèvement de la recherche | Examinateur |
|---|---|---|
| LA HAYE | 20 MARS 1991 | ESTRELA Y CALPE J. |

EPO FORM 1503 03.82 (P0402)